# EUROPEAN PATENT APPLICATION

(11) **EP 4 592 142 A1**
(43) Date of publication of application: **30.07.2025**
(21) Application number: 24153434.6
(22) Date of filing: 23.01.2024
(51) Int. Cl.: B60Q 3/62, B60Q 3/74, F21S 43/16, F21S 43/20

(54) **LIGHTING DEVICE, VEHICLE LIGHTING SYSTEM AND VEHICLE**

(71) Applicant: Alps Alpine Co., Ltd., Tokyo 145-0067 (JP)
(72) Inventor: Surugiu, Florin, Gothenburg (SE)
(74) Representative: Schmitt-Nilson Schraud Waibel Wohlfrom Patentanwälte Partnerschaft mbB

(57) **Abstract**

An aspect of the present invention relates to a lighting device (1) for an ambient lighting system (100) of a vehicle (200), comprising: at least one lighting element (10, 20, 30) having a first side (11, 21, 31) and an opposite second side (12, 22, 32) facing a viewer (V) of the lighting device (1), the at least one lighting element (10, 20, 30) comprising: a LED light source (13, 23, 33) configured to emit excitation light (EX1, EX2, EX3) of an excitation wavelength range; a phosphorescent material (14, 24, 34) configured to emit visible emission light (EM1, EM2, EM3) of an emission wavelength range in response to being illuminated with the excitation light (EX1, EX2, EX3) emitted by the LED light source (13, 23, 33), the phosphorescent material (14, 24, 34) being arranged between the first and the second side (11, 21, 31; 12, 22, 32) of the at least one lighting element (10, 20, 30); and at least one notch filter (15, 25, 35) arranged at the second side (12, 22, 32) of the at least one lighting element (10, 20, 30) and configured to filter light in or of the excitation wavelength range of the excitation light (EX1, EX2, EX3) out of light emitted by a light source (40) external to the at least one lighting element (10, 20, 30) and incident in direction of the second side (12, 22, 32) of the at least one lighting element (10, 20, 30) on the phosphorescent material (14, 24, 34). Further aspects relate to a vehicle lighting system and a vehicle comprising said vehicle lighting system.

## Description

The present invention relates to a lighting device for a vehicle lighting system, a vehicle lighting system and to a vehicle comprising such vehicle lighting system.

Conventionally, lighting devices, particularly for vehicle lighting systems that may for example comprise an ambient lighting system inside a vehicle, background lighting in a vehicle, ceiling lighting, dashboard lighting, effect lighting and/or display devices inside a vehicle, comprise a LED light source. Such lighting devices may further comprise a phosphorescent material which is used as illuminant in these lighting devices to generate visible light.

It is commonly known that a phosphorescent material has an excitation or absorption wavelength band or range and an emission wavelength band or range. That is, the phosphorescent material emits light in or of the emission wavelength range if illuminated, for example by a LED light source, with and thus excited by light in or of the excitation wavelength range of the phosphorescent material.

Lighting devices comprising a phosphorescent material as illuminant may have the drawback that they may unintentionally emit visible light due to excitation of the phosphorescent material by incident light of external light sources, such as sun light or artificial light sources.

For example, in the evening hours after the sunset, said lighting devices might emit visible light because the phosphorescent material was excited by sun light during the last daylight minutes. This unintentional emission of visible light may also occur in case outside artificial light is used. That is, these conventional lighting devices might emit light even if the devices are turned off.

Therefore, it would be beneficial to provide an improved lighting device for a vehicle lighting system, in which unintentional light emission can be prevented, a vehicle lighting system which comprises at least one improved lighting device and a vehicle which comprises said vehicle lighting system.

Accordingly, the invention relates to a lighting device for a vehicle lighting system, a vehicle lighting system and a vehicle as specified in the claims.

An aspect of the present invention relates to a lighting device for a vehicle lighting system, comprising: at least one lighting element having a first side and an opposite second side facing a viewer of the lighting device, the at least one lighting element comprising: a LED light source configured to emit excitation light of an excitation wavelength range; a phosphorescent material configured to emit visible emission light of an emission wavelength range in response to being illuminated with the excitation light emitted by the LED light source, the phosphorescent material being arranged between the first and the second side of the at least one lighting element; and at least one notch filter arranged at the second side of the at least one lighting element and configured to filter light in or of the excitation wavelength range out of light emitted by a light source external to the at least one lighting element and incident in direction of the second side of the at least one lighting element on the phosphorescent material.

According to the invention, unintentional or unwanted emission of visible light generated by the phosphorescent material due to excitation of the phosphorescent material by an external light source can be prevented effectively. In particular, the at least one notch filter prevents unwanted light emission coming from the phosphorescent material when the lighting system is actually in the OFF state. The notch filter is a filter that blocks wavelengths in the light of the external light source incident on the phosphorescent material that are in the excitation wavelength range of light that would excite the phosphorescent material.

Arranging the at least one notch filter thus allows for control of the phosphorescent material excitation state in a way that the LED light source excites the phosphorescent material which will then emit visible light. The notch filter may significantly reduce or prevent the excitation of the phosphorescent material by external light. Due to the notch filter, light of an external light source may even not excite the phosphorescent material at all and therefore no visible light will be emitted by the lighting device in an uncontrolled manner.

Herein, the excitation wavelength range comprises one or more wavelengths. It comprises the excitation wavelength, in particular the peak wavelength, which is characteristic to excite and cause the phosphorescent material to emit light and wavelengths which are distributed around the excitation wavelength. The excitation wavelength range may be very narrow. It may substantially only comprise the excitation wavelength of the phosphorescent material.

Preferably, the at least one notch filter is configured to filter the excitation wavelength of the phosphorescent material out of the light emitted by the light source external to the at least one lighting element.

Herein, the emission wavelength range comprises one or more wavelengths. It comprises the emission wavelength, in particular the peak wavelength, which is characteristic for the phosphorescent material that emits light including this emission wavelength after being excited and wavelengths which are distributed around the emission wavelength. The emission wavelength range may be very narrow. It may substantially only comprise the emission wavelength of the phosphorescent material.

In an embodiment, the at least one lighting element has planar geometry. The at least one lighting element may have plate-like shape. The first and second side of the at least one lighting element may be parallel to each other. A direction between the first side and the second side may define a vertical axis, i.e. z-axis, of a three-dimensional xyz-coordinate system. In this context, the first side may be a lower side of the at least one lighting element and the second side may be an upper side of the at least one lighting element. The first and second side may extend perpendicular to the vertical axis or the viewing direction of the viewer. They may extend horizontally.

In an embodiment, the at least one lighting element may comprise or be one lighting element or 2, 3, 4, 5, 6, 7, 8, 9, 10, etc. lighting elements.

In an embodiment, the LED light source comprises one or more LEDs that are each configured to emit light of the excitation wavelength range. For example, the LED light source may comprise or be one LED or 2, 3, 4, 5, 6, 7, 8, 9, 10, etc. LEDs. The LED light source, in particular each of the one or more LEDs, may be selected and/or configured to emit the excitation light of the excitation wavelength range to excite the phosphorescent material.

The excitation wavelength range is characteristic or specific for the phosphorescent material used and to be excited in the at least one lighting element.

In an embodiment, the phosphorescent material is formed as or comprised by a plate or foil. This plate or foil may be translucent or transparent. The phosphorescent material may for example comprise or be SrAl₂O₄:Eu²⁺:Dy³⁺. The excitation wavelength range of this phosphorescent material is between 360 nm and 380 nm. The peak excitation wavelength is at 370 nm. The emission light of said phosphorescent material is of an emission wavelength range between 409 nm and 700 nm. The peak emission wavelength is at 520 nm.

In the context of the invention, the phosphorescent material serves as temporary light storage. It ensures light uniformity and that no light spots occur in the light emitted by the lighting device.

In an embodiment, the phosphorescent material comprises or is at least one of the following: zinc sulfide which emits greenish-yellow or bluish-green light upon excitation, strontium aluminate which emits blue or green light upon excitation, calcium sulfide which emits orange-red light upon excitation, barium magnesium aluminate which emits green light upon excitation, europium-doped strontium aluminate which emits blue or green light upon excitation, terbium-doped gadolinium oxysulfide which emits green or yellow light upon excitation, manganese-doped zinc silicate which emits yellow-green or green light upon excitation, or copper-doped zinc sulfide which emits red light upon excitation.

In an embodiment, the at least one notch filter is a transparent filter plate or foil. The notch filter may also be a resin.

In the context of the invention, the at least one notch filter has the purpose that light in or of the excitation wavelength range and incident on the at least one notch filter is scattered by the notch filter so that the phosphorescent material may not be unintentionally excited by light of an external light source containing one or more wavelengths in or of the excitation wavelength range.

In the context of the invention, the light of the external light source may comprise or be for example the sunlight or light of artificial light sources inside a vehicle. The light of the external light source may additionally or alternatively comprise or be light emitted by other lighting elements which may be comprised by the lighting device.

In an embodiment, the at least one lighting element further comprises a light guide element that is configured to guide the excitation light emitted by the LED light source to the phosphorescent material and arranged at the first side of the at least one lighting element.

According to this embodiment, the lighting device may be fabricated in a more compact, in particular thinner, form since the LED light source may be disposed in a more flexible manner in relation to the phosphorescent material. The LED light source need not for example be disposed in close vicinity to the phosphorescent material, e.g. at the first side of the at least one lighting element. The LED light source may be disposed somewhere in a plane parallel to the phosphorescent material.

In an embodiment, the light guide element comprises or is a light guide plate.

According to this embodiment, a uniform distribution of the excitation light emitted by the LED light source to and across the phosphorescent material can be achieved.

In an embodiment, the lighting device further comprises a specular reflector film arranged at the first side of the one of the at least one lighting element which is located the furthest away from the viewer in direction of the viewer. In viewing direction of the viewer, the specular reflector film may be arranged behind the last one of the at least one lighting element. In viewing direction, the specular reflector film may be arranged behind the outermost of the at least one lighting element. The specular reflector film may be arranged below each of or all of the at least one lighting element.

In an embodiment, the lighting device may comprise exactly one or only one specular reflector film.

According to this embodiment, a specular reflector film improves uniformity and intensity of the light emitted or output by the lighting device.

The specular reflector film may be attached to the light guide element.

In an embodiment, the lighting device further comprises a control unit configured to control an ON/OFF-cycle of the LED light source of the at least one lighting element during active operation of the lighting device.

According to this embodiment, power consumption of the lighting device may be improved.

The term "active operation" relates to the state of the lighting device in which the at least one lighting element, in particular the phosphorescent material, emits the emission light caused by excitation of the phosphorescent material by the excitation light emitted by the LED light source.

The control unit may be communicatively coupled with the LED light source of the at least one lighting element. The control unit may be configured to transmit signals to and/or receive signals from the LED light source.

In an embodiment, the control unit comprises a sensor, in particular an optical sensor, configured to measure an intensity of the emission light emitted by the phosphorescent material of the at least one lighting element for controlling the ON/OFF-cycle.

According to an embodiment, the ON/OFF-cycle may be set and/or adjusted by the control unit automatically. The intensity of the emission light of the phosphorescent material decays over time and the LED-OFF time may be associated directly with the decay time of the intensity. By measuring the emission light intensity over time using the sensor and checking whether the intensity is under a predetermined visibility, in particular brightness, threshold for the emission light, the control unit may determine the OFF-time of the LED light source until it needs to be switched on again in order to achieve a uniform and continuous lighting.

In an embodiment, the at least one lighting element further comprises a lithographic structure configured to change at least one optical property of the emission light emitted by the phosphorescent material of the at least one lighting element.

The at least one optical property may comprise or be intensity and/or refraction angle and/or reflectivity and/or transmissivity. The lithographic structure may comprise or be a relief in the phosphorescent material. The phosphorescent material may for example be 3D-printed at different layer heights. The phosphorescent material may have variable thickness along the phosphorescent material.

In an embodiment, the at least one lighting element comprises a first lighting element and a second lighting element. The first lighting element, having a first side and an opposite second side facing the viewer of the lighting device, comprises: a first LED light source configured to emit first excitation light of an excitation wavelength range; a first phosphorescent material configured to emit visible first emission light of an emission wavelength range in response to being illuminated with the first excitation light emitted by the first LED light source, the first phosphorescent material being arranged between the first and the second side of the first lighting element; and at least one first notch filter arranged at the second side of the first lighting element and configured to filter light in or of the excitation wavelength range of the first excitation light out of the light emitted by the light source external to the first lighting element and incident in direction of the second side of the first lighting element on the first phosphorescent material.

The second lighting element, having a first side and an opposite second side facing the viewer of the lighting device, comprises: a second LED light source configured to emit second excitation light of an excitation wavelength range; a second phosphorescent material configured to emit visible second emission light of an emission wavelength range in response to being illuminated with the second excitation light emitted by the second LED light source, the second phosphorescent material being arranged between the first and the second side of the second lighting element; and at least one second notch filter arranged at the second side of the second lighting element and configured to filter light in or of the excitation wavelength range of the second excitation light out of the light emitted by the light source external to the second lighting element and incident in direction of the second side of the second lighting element on the second phosphorescent material. The first side of the second lighting element is arranged at the second side of the first lighting element.

According to this embodiment, light of different colours and/or tones may be produced and/or emitted by the lighting device towards the viewer.

The embodiments, features and advantages as described with reference to the at least one lighting element apply to the first and second lighting element accordingly.

In viewing direction of the viewer, the first lighting element may be arranged behind the second lighting element.

In an embodiment, the at least one second notch filter of the second lighting element comprises two second notch filters. One of the two second notch filters is arranged at the second side of the second lighting element, and the other one of the two second notch filters is arranged at the first side of the second lighting element.

According to this embodiment, providing two notch filters, wherein one is arranged at the second side of the second lighting element and the other one is arranged at the first side of the second lighting element, ensures that not only light in or of the excitation wavelength range of the second phosphorescent material is filtered out of light from a light source external to the lighting device, such as sunlight or artificial light, but also light in or of the excitation wavelength range of the second phosphorescent material is filtered out of the first emission light of the first phosphorescent material. Thus, unintentional excitations of the second phosphorescent material by the first lighting element as light source external to the second lighting element can be prevented as well.

In an embodiment, the emission wavelength range of the first phosphorescent material of the first lighting element and the emission wavelength range of the second phosphorescent material of the second lighting element are different from each other. They are in particular non-overlapping.

According to this embodiment, the lighting device may emit light of different colours and/or brightnesses and/or tones.

The first emission light may for example be in the blue, yellow or red spectrum of light. Additionally or alternatively, the second emission light may be in the blue, yellow or red spectrum of light.

In an embodiment, the at least one lighting element further comprises a third lighting element. The third lighting element, having a first side and an opposite second side facing the viewer of the lighting device, comprises: a third LED light source configured to emit third excitation light of an excitation wavelength range; a third phosphorescent material configured to emit visible third emission light of an emission wavelength range in response to being illuminated with the third excitation light emitted by the third LED light source, the third phosphorescent material being arranged between the first and the second side of the third lighting element; and at least one third notch filter arranged at the second side of the third lighting element and configured to filter light in or of the excitation wavelength range of the third excitation light out of the light emitted by the light source external to the third lighting element and incident in direction of the second side of the third lighting element on the third phosphorescent material. The first side of the third lighting element is arranged at the second side of the second lighting element.

According to this embodiment, even more colour and/or tone variations of light may be produced and/or emitted by the lighting device towards the viewer.

The embodiments, features and advantages as described with reference to the at least one lighting element also apply to the third lighting element.

In an embodiment, the at least one third notch filter of the third lighting element comprises two third notch filters. One of the two third notch filters is arranged at the second side of the third lighting element, and the other one of the two third notch filters is arranged at the first side of the third lighting element.

According to this embodiment, providing two notch filters, wherein one is arranged at the second side of the third lighting element and the other one is arranged at the first side of the third lighting element, ensures that not only light in or of the excitation wavelength range of the third phosphorescent material is filtered out of light from a light source external to the lighting device, such as sunlight or artificial light, but also light in or of the excitation wavelength range of the third phosphorescent material is filtered out of the second emission light of the second phosphorescent material and/or of the first emission light of the first phosphorescent material. Thus, unintentional excitations of the third phosphorescent material by the first lighting element and/or the second lighting element as light source external to the third lighting element can be prevented as well.

In an embodiment, the emission wavelength range of the first phosphorescent material of the first lighting element, the emission wavelength range of the second phosphorescent material of the second lighting element and the emission wavelength range of the third phosphorescent material of the third lighting element are different from each other. They are in particular non-overlapping.

According to this embodiment, the lighting device may emit light of even more different colours and/or brightnesses and/or tones.

In particular, the first emission light is in the spectrum of red light. Additionally or alternatively, the second emission light is in the spectrum of yellow light. Additionally or alternatively, the third emission light is in the spectrum of blue light.

Another aspect of the present invention relates to a vehicle lighting system, comprising at least one lighting device as described above, wherein the vehicle lighting system is in particular an ambient lighting system of a vehicle.

The embodiments, features and advantages as described with reference to the lighting device above can be transferred and applied to the vehicle lighting system accordingly.

The at least one lighting device may comprise one lighting device or 2, 3, 4, 5, 6, 7, 8, 9 or 10, etc. lighting devices.

Yet another aspect of the present invention relates to a vehicle comprising a vehicle lighting system as described above.

Embodiments, features and advantages of the vehicle lighting system can be transferred and applied to the vehicle accordingly.

In the following, further embodiments of the invention are described with reference to the drawings. It is noted that individual features shown in the drawings may be combined to form further embodiments.

The drawings show:
- Fig. 1:: an embodiment of a lighting device according to aspects of the invention;
- Fig. 2:: another embodiment of a lighting device according to aspects of the invention;
- Fig. 3:: an embodiment of a vehicle lighting system according to aspects of the invention; and
- Fig. 4:: an embodiment of a vehicle comprising a vehicle lighting system according to aspects of the invention.

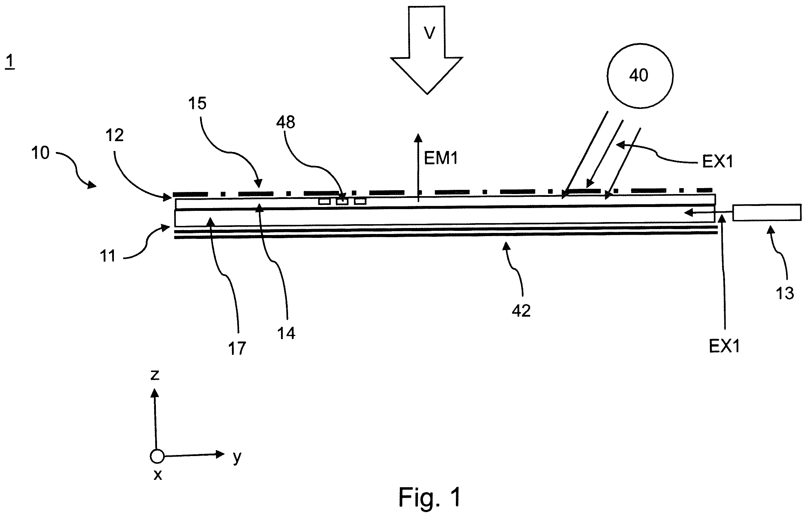

Fig. 1 depicts an embodiment of a lighting device according to aspects of the invention. The lighting device 1 comprises a lighting element 10 that has plate-like geometry. The lighting element 10 has a first side 11 and an opposite second side 12 that faces a viewer V of the lighting device 1. With respect to the viewing direction of the viewer V indicated by the big arrow labelled with "V", the first side 11 is located behind the second side 12.

Fig. 1 shows an exemplary xyz-coordinate system used for better understanding the invention. The z-axis of this coordinate system is aligned with the viewing direction of the viewer V. It is in particular parallel to the viewing direction of the viewer V. The viewing direction points in the negative z-direction. All terms relating to information regarding top and bottom in the following, such as "up", "down", "upper", "lower", "vertical", etc., should be understood as relating to the z-axis, with "up" and "upper" relating to positive z-direction and "down" and "lower" relating to negative z-direction. The term "horizontal" relates to the x- and/or y-axis of the xyz-coordinate system. The xyz-coordinate system may be bound to Earth or one of the first side 11 or second side 12.

The first side 11 may also form a lower side of the lighting element 10 and the second side 12 may form an upper side of the lighting element 10. The direction from the first side 11 to the second side 12 may thus also be referred to as vertical direction. That is, the components of the lighting element 10 may be stacked vertically in direction towards the viewer V.

The lighting element 10 comprises a phosphorescent material 14, which may be a phosphorescent plate, that is configured to emit visible emission light EM1 of an emission wavelength range in response to being illuminated with excitation light EX1 of an excitation wavelength range that is characteristic or specific for the phosphorescent material 14. The phosphorescent material 14 is arranged between the first side 11 and the second side 12 of the lighting element 10.

The lighting element 10 further comprises a light guide element 17, which may be a light guide plate. The light guide element 17 is arranged at the first side 11 of the lighting element 10. The light guide element 17 is arranged below and directly at the phosphorescent material 14.

The lighting element 10 further comprises a LED light source 13 configured to emit the excitation light EX1 of the excitation wavelength range to excite the phosphorescent material 14. The LED light source 13 is arranged at a side surface of the light guide element 17 in a direction perpendicular to the viewing direction of the viewer V or in horizontal direction regarding the plane of projection shown in Fig. 1. The LED light source 13 is arranged such that the light emitted by the LED light source 13, i.e. the excitation light EX1 for the phosphorescent material 14, can enter the light guide element 17 and thereby be guided or directed to the phosphorescent material 14.

The lighting element 10 further comprises a notch filter 15 that is arranged at the second side 12 of the lighting element 10 and on top of the phosphorescent material 14. The notch filter is arranged and configured in such a way that light in or of the excitation wavelength range is filtered out of light emitted by a light source 40 external to the lighting element 10 and incident in direction of the second side 12 of the lighting element 10 on the phosphorescent material 14.

The light emitted by the external light source 40 contains the excitation light EX1, i.e. light of the excitation wavelength range to excite the phosphorescent material 14. The notch filter 15 is configured such that only light in the light emitted by the external light source 40 that does not correspond to the excitation light EX1 may pass the notch filter 15 and reach the phosphorescent material 14.

The lighting device 1 further comprises a specular reflector film 42 that is arranged at the first side 11 of the lighting element 10 below the light guide element 17. The specular reflector film 42 may be attached to the light guide element 17 at a side facing away from the viewer V. It may be attached to the lower side of the light guide element 17.

In particular, in the embodiment of the lighting device 1 shown in Fig. 1, the LED light source 13 is configured to emit light in the excitation wavelength range which the phosphorescent material 14 absorbs and converts to visible light of an emission wavelength range. The light emitted by the LED light source 13 is guided through the light guide plate 17 towards the phosphorescent plate 14. The specular reflector film 42 is located underneath the light guide element 17 and ensures that the scattering light coming from the light guide element 17 is reflected towards the phosphorescent material 14, thus boosting the light intensity and uniformity of the excitation light EX1. The phosphorescent material 14 acts as a light storage for a short-defined amount of time. This allows the LED light source 13 to be turned off for few ms. The cumulated ms of OFF time can lead to power saving. The more LEDs the LED light source 13 comprises, the greater the power saving potential can be. On top of the phosphorescent material 14, a notch filter 15 is placed. The purpose of the notch filter 15 is to block the outside light that would excite the phosphorescent plate 14, thereby avoiding unintended visible light emission when, for example, the lighting device 1 is turned OFF.

The lighting element 10 may also comprise a lithographic structure 48. The lithographic structure 48 may be formed as a relief in a surface, in particular an upper surface, of the phosphorescent material 14 that faces the viewer V. The relief may for example be created by 3D-printing the phosphorescent material 14 in the region of the relief at different layer heights. By incorporating a lithographic structure 48, the lighting device 1 can achieve different optical effects.

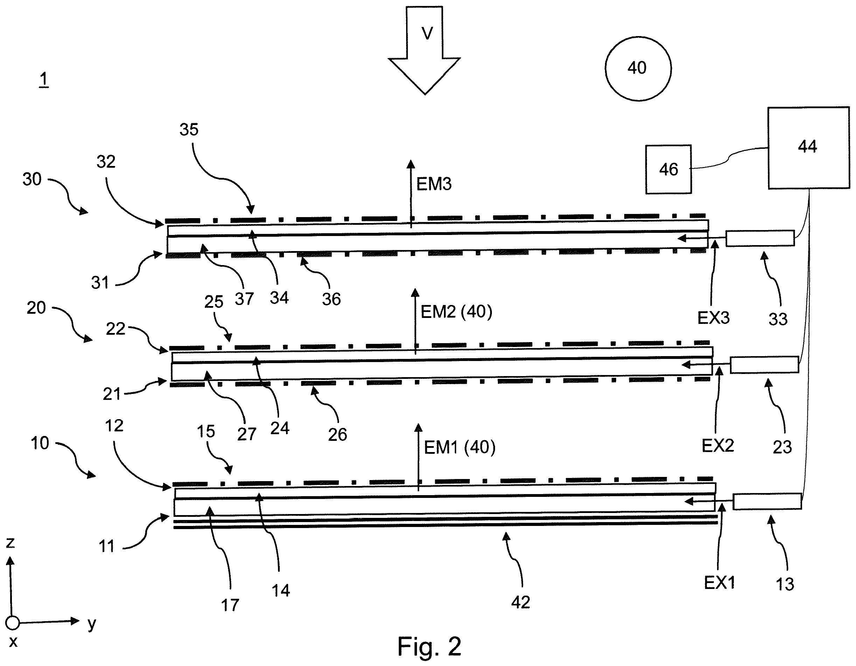

Fig. 2 shows another embodiment of a lighting device according to aspects of the invention. Fig. 2 shows an xyz-coordinate system as described above with reference to Fig. 1. The lighting device 1 shown in Fig. 2 comprises two further lighting elements 20 and 30 in addition to the first lighting element 10. The second and third lighting elements 20 and 30 have similar or the same components, structure and arrangement as the first lighting element 10 of Fig. 1.

The second lighting element 20 has a first side 21 and an opposite second side 22 facing the viewer V. The second lighting element 20 comprises a second phosphorescent material 24, which may be a phosphorescent plate, a notch filter 25 on top of the second phosphorescent material 24 and a second light guide element 27, which may be a light guide plate, arranged below and directly at the second phosphorescent material 27. The second lighting element 20 further comprises a second LED light source 23 that is configured to emit second excitation light EX2 into the second light guide element 27 that guides or directs the second excitation light EX2 to the second phosphorescent material 24. The second LED light source 23 is arranged with respect to the second light guide element 27 in the same way as the first LED light source 13 with respect to the first light guide element 17.

In comparison to the first lighting element 10, the second lighting element 20 also comprises a further notch filter 26 that is arranged at the first side 21 of the second lighting element 20. The notch filter 26 is located directly below the second light guide element 27 and is configured to filter light in or of the excitation wavelength range characteristic for the second phosphorescent material 24 of the second lighting element 20 out of the first emission light EM1 emitted by the first lighting element 10. When considering the first lighting element 10 as light source 40 external to the second lighting element 20, the first emission light EM1 emitted by the first lighting element 10 towards the second phosphorescent material 24 of the second lighting element 20 may contain light in or of the excitation wavelength range of the second phosphorescent material 24 of the second lighting element 20. The notch filter 26 is configured to prevent such light from reaching and accidentally exciting the second phosphorescent material 24 of the second lighting element 20.

The second lighting element 20 may be arranged above or on top of the first lighting element 10. A specular reflector film 42 is attached to the first light guide element 17, in particular to the lower side of the light guide element 17.

The third lighting element 30 has a first side 31 and an opposite second side 32 facing the viewer V. The third lighting element 30 comprises a third phosphorescent material 34, which may be a phosphorescent plate, a notch filter 35 on top of the third phosphorescent material 34 and a third light guide element 37, which may be a light guide plate, arranged below and directly at the third phosphorescent material 34. The third lighting element 30 further comprises a third LED light source 33 that is configured to emit third excitation light EX3 into the third light guide element 37 that guides or directs the third excitation light EX3 to the third phosphorescent material 34. The third LED light source 33 is arranged with respect to the third light guide element 37 in the same way as the first LED light source 13 with respect to the first light guide element 17.

In comparison to the first lighting element 10, the third lighting element 30 also comprises a further notch filter 36 that is arranged at the first side 31 of the third lighting element 30. The notch filter 36 is located directly below the third light guide element 37 and is configured to filter light in or of the excitation wavelength range characteristic for the third phosphorescent material 34 of the third lighting element 30 out of the second emission light EM2 emitted by the second lighting element 20 and/or out of the first emission light EM1 emitted by the first lighting element 10. When considering the first lighting element 10 and/or the second lighting element 20 as light source 40 external to the third lighting element 30, the first emission light EM1 emitted by the first lighting element 10 towards the third phosphorescent material 34 of the third lighting element 30 and/or the second emission light EM2 emitted by the second lighting element 20 towards the third phosphorescent material 34 of the third lighting element 30 may contain light in or of the excitation wavelength range of the third phosphorescent material 34 of the third lighting element 30. The notch filter 36 is configured to prevent such light from reaching and accidentally exciting the third phosphorescent material 34 of the lighting element 30.

The third lighting element 30 may be arranged above or on top of the second lighting element 20.

The LED light sources 13, 23 and 33 may be configured to match the peak excitation wavelength of the respective phosphorescent material 14, 24, 34. For example, the first LED light source 13 may be configured to emit first excitation light EX1 of the wavelength 591 nm, which is in the yellow spectrum of light. The second LED light source 23 may be configured to emit second excitation light EX2 of the wavelength 510 nm, which is in the green spectrum of light. The third LED light source 33 may be configured to emit third excitation light EX3 of the wavelength 360 nm, which is in the violet spectrum of light.

In particular, in the embodiment of the lighting device 1 shown in Fig. 2, the lighting elements 10, 20 and 30 may be stacked on top of each other. By stacking the lighting elements 10, 20, 30 comprising the respective phosphorescent materials 14, 24, 34 that absorb light of different colours and thus emit light of different colours, any colour and/or colour tone can be created and emitted by the lighting device 1. In this case, each stacked lighting element 10, 20, 30 has preferably a notch filter on top and on bottom. This is preferable to avoid excitation caused by the light emission coming from lower phosphorescent materials. Therefore, it is preferable to also have notch filters 26, 36 between the stacked lighting elements 10, 20, 30 in order to prevent unintentional emission of light by the lighting device 1 shown in Fig. 2.

The lighting device 1 also comprises a control unit 44 which is coupled to each of the LED light sources 13, 23 and 33 of the respective lighting element 10, 20, 30. The control unit 44 is configured to control an ON/OFF-cycle of the LED light sources 13, 23, 33 during active operation of the lighting device 1, i.e. during light emission by the lighting device 1.

An ON/OFF-cycle for one of the LED light sources 13, 23, 33 may be defined as follows:
The respective phosphorescent material absorbs the light emitted by the LED light source (ON state) and stores it as light energy. When the LED light source is in OFF state, the phosphorescent plate will emit the stored light for few ms. After that, the LED light source will turn ON again and the cycle starts again. This will then result in continuous illumination.

The light emitted by the phosphorescent material will decay over time and therefore the maximum OFF time of the LED light source is directly conditioned by the decay time.

Particularly, the ON/OFF-cycle can be configured by the control unit 44 in an automated fashion. The control unit 44 can optimize the ON/OFF-cycle of the LED light sources 13, 23, 33 for the decay and light intensity. For this purpose, the control unit 44 can further comprise an optical sensor 46 which is configured to measure the light intensity thresholds in order to automate the cycle. The sensor 46 may be communicatively coupled to the control unit 44. The control unit 44 may be configured to transmit signals to and receive signals from the sensor 46.

By controlling the ON/OFF-cycle of the LED light sources of the lighting device 1, in particular in an automated fashion, it is possible to reduce power consumption of the lighting device 1. As a result, in particular sustainability of electric vehicles may be improved. A reduced power consumption may lead to longer battery life and eventually to more efficient transportation.

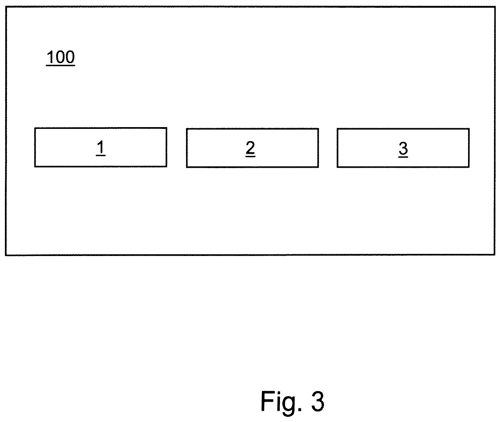

Fig. 3 shows an embodiment of a vehicle lighting system according to aspects of the invention. The vehicle lighting system 100 may be an ambient lighting system that comprises three lighting devices 1, 2 and 3, each of which may be configured in accordance with the lighting devices 1 shown in Fig. 1 or Fig. 2.

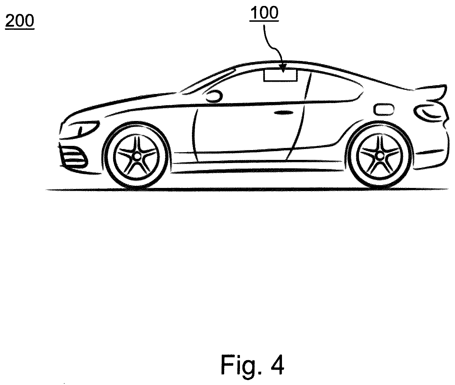

Fig. 4 shows an embodiment of a vehicle according to aspects of the invention. The vehicle 200 comprises a vehicle lighting system 100, e.g. an ambient lighting system, as described herein. The vehicle lighting system 100 may, for example, be installed in the dome or at the ceiling of the vehicle 200. The vehicle lighting system 100 may be part of the ceiling lighting of the vehicle 200. The vehicle is in particular a passenger vehicle. Particularly, the vehicle lighting system 100 may be installed in or at a dashboard of the vehicle 200. It may be part of a dashboard lighting of the vehicle 200. The vehicle lighting system 100 may comprise one or more displays inside the vehicle 200.

### List of reference signs

- 1, 2, 3: lighting device
- 10, 20, 30: first, second, third lighting element
- 11, 21, 31: first side of first, second, third lighting element
- 12, 22, 32: second side of first, second, third lighting element
- 13, 23, 33: first, second, third LED light source
- 14, 24, 34: first, second, third phosphorescent material
- 15, 25, 35: first notch filter at second side of the first, second, third lighting element
- 26, 36: second notch filter at first side of the second, third lighting element
- 17, 27, 37: first, second, third light guide element
- 40: light source external to lighting element
- 42: specular reflector film
- 44: control unit
- 46: sensor
- 48: lithographic structure
- 100: ambient lighting system
- 200: vehicle
- EX1, EX2, EX3: first, second, third excitation light
- EM1, EM2, EM3: first, second, third emission light
- V: viewer

## Claims

1. Lighting device (1) for a vehicle lighting system (100), comprising:
at least one lighting element (10, 20, 30) having a first side (11, 21, 31) and an opposite second side (12, 22, 32) facing a viewer (V) of the lighting device (1), the at least one lighting element (10, 20, 30) comprising:
a LED light source (13, 23, 33) configured to emit excitation light (EX1, EX2, EX3) of an excitation wavelength range;
a phosphorescent material (14, 24, 34) configured to emit visible emission light (EM1, EM2, EM3) of an emission wavelength range in response to being illuminated with the excitation light (EX1, EX2, EX3) emitted by the LED light source (13, 23, 33), the phosphorescent material (14, 24, 34) being arranged between the first and the second side (11, 21, 31; 12, 22, 32) of the at least one lighting element (10, 20, 30); and
at least one notch filter (15, 25, 35) arranged at the second side (12, 22, 32) of the at least one lighting element (10, 20, 30) and configured to filter light in or of the excitation wavelength range of the excitation light (EX1, EX2, EX3) out of light emitted by a light source (40) external to the at least one lighting element (10, 20, 30) and incident in direction of the second side (12, 22, 32) of the at least one lighting element (10, 20, 30) on the phosphorescent material (14, 24, 34).

2. Lighting device (1) according to claim 1, wherein the at least one lighting element (10, 20, 30) further comprises:
a light guide element (17, 27, 37) configured to guide the excitation light (EX1, EX2, EX3) emitted by the LED light source (13, 23, 33) to the phosphorescent material (14, 24, 34), the light guide element being arranged at the first side of the at least one lighting element (10, 20, 30).

3. Lighting device (1) according to one of the preceding claims, wherein the lighting device (1) further comprises:
a specular reflector film (42) arranged at the first side (11, 21, 31) of the one of the at least one lighting element (10, 20, 30) which is located the furthest away from the viewer (V) in direction of the viewer (V).

4. Lighting device (1) according to one of the preceding claims, wherein the lighting device (1) further comprises:
a control unit (44) configured to control an ON/OFF-cycle of the LED light source (13, 23, 33) of the at least one lighting element (10, 20, 30) during active operation of the lighting device (1).

5. Lighting device (1) according to claim 4, wherein the control unit (44) comprises a sensor (46) configured to measure an intensity of the emission light (EM1, EM2, EM3) emitted by the phosphorescent material (14, 24, 34) of the at least one lighting element (10, 20, 30) for controlling the ON/OFF-cycle.

6. Lighting device (1) according to one of the preceding claims, wherein the at least one lighting element (10, 20, 30) further comprises:
a lithographic structure (48) configured to change at least one optical property of the emission light (EM1, EM2, EM3) emitted by the phosphorescent material (14, 24, 34) of the at least one lighting element (10, 20, 30).

7. Lighting device (1) according to one of the preceding claims, wherein the at least one lighting element (10, 20, 30) comprises a first lighting element (10) and a second lighting element (20);
wherein the first lighting element (10), having a first side (11) and an opposite second side (12) facing the viewer (V) of the lighting device (1), comprises:
a first LED light source (13) configured to emit first excitation light (EX1) of an excitation wavelength range;
a first phosphorescent material (14) configured to emit visible first emission light (EM1) of an emission wavelength range in response to being illuminated with the first excitation light (EX1) emitted by the first LED light source (13), the first phosphorescent material (14) being arranged between the first and the second side (11; 12) of the first lighting element (10); and
at least one first notch filter (15) arranged at the second side (12) of the first lighting element (10) and configured to filter light in or of the excitation wavelength range of the first excitation light (EX1) out of the light emitted by the light source (40) external to the first lighting element (10) and incident in direction of the second side (12) of the first lighting element (10) on the first phosphorescent material (14);
wherein the second lighting element (20), having a first side (21) and an opposite second side (22) facing the viewer (V) of the lighting device (1), comprises:
a second LED light source (23) configured to emit second excitation light (EX2) of an excitation wavelength range;
a second phosphorescent material (24) configured to emit visible second emission light (EM2) of an emission wavelength range in response to being illuminated with the second excitation light (EX2) emitted by the second LED light source (23), the second phosphorescent material (24) being arranged between the first and the second side (21; 22) of the second lighting element (20); and
at least one second notch filter (25) arranged at the second side (22) of the second lighting element (20) and configured to filter light in or of the excitation wavelength range of the second excitation light (EX2) out of the light emitted by the light source (40) external to the second lighting element (20) and incident in direction of the second side (22) of the second lighting element (20) on the second phosphorescent material (24);
wherein the first side (21) of the second lighting element (20) is arranged at the second side (12) of the first lighting element (10).

8. Lighting device (1) according to claim 7, wherein the at least one second notch filter of the second lighting element comprises two second notch filters (25, 26);
wherein one (25) of the two second notch filters (25, 26) is arranged at the second side (22) of the second lighting element (20); and
wherein the other one (26) of the two second notch filters (25, 26) is arranged at the first side (21) of the second lighting element (20).

9. Lighting device (1) according to claim 7 or 8, wherein the emission wavelength range of the first phosphorescent material (14) of the first lighting element (10) and the emission wavelength range of the second phosphorescent material (24) of the second lighting element (20) are different from each other, in particular non-overlapping.

10. Lighting device (1) according to one of claims 7 to 9, wherein the at least one lighting element (10, 20, 30) further comprises a third lighting element (30);
wherein the third lighting element (30), having a first side (31) and an opposite second side (32) facing the viewer (V) of the lighting device (1), comprises:
a third LED light source (33) configured to emit third excitation light (EX3) of an excitation wavelength range;
a third phosphorescent material (34) configured to emit visible third emission light (EM3) of an emission wavelength range in response to being illuminated with the third excitation light (EX3) emitted by the third LED light source (33), the third phosphorescent material (34) being arranged between the first and the second side (31; 32) of the third lighting element (30); and
at least one third notch filter (35) arranged at the second side (32) of the third lighting element (30) and configured to filter third light in the excitation wavelength range of the third excitation light (EX3) out of the light emitted by the light source (40) external to the third lighting element (30) and incident in direction of the second side (32) of the third lighting element (30) on the third phosphorescent material (34);
wherein the first side (31) of the third lighting element (30) is arranged at the second side (22) of the second lighting element (20).

11. Lighting device (1) according to claim 10, wherein the at least one third notch filter of the third lighting element (30) comprises two third notch filters (35, 36);
wherein one (35) of the two third notch filters (35, 36) is arranged at the second side (32) of the third lighting element (30); and
wherein the other one (36) of the two third notch filters (35, 36) is arranged at the first side (31) of the third lighting element (30).

12. Lighting device (1) according to claim 10 or 11, wherein the emission wavelength range of the first phosphorescent material (14) of the first lighting element (10), the emission wavelength range of the second phosphorescent material (24) of the second lighting element (20) and the emission wavelength range of the third phosphorescent material (34) of the third lighting element (30) are different from each other, in particular non-overlapping.

13. Lighting device (1) according to claim 12, wherein the first emission light (EM1) is in the spectrum of red light; and/or
wherein the second emission light (EM2) is in the spectrum of yellow light; and/or
wherein the third emission light (EM3) is in the spectrum of blue light.

14. Vehicle lighting system (100), comprising:
at least one lighting device (1, 2, 3) according to one of the preceding claims, particularly wherein the lighting system is an ambient lighting system of a vehicle.

15. Vehicle (200) comprising:
a vehicle lighting system (100) according to claim 14.
